(19) Europäisches Patentamt
European Patent Office
Office européen des brevets

(11) **EP 4 362 146 A1**

(12) **EUROPEAN PATENT APPLICATION**


(43) Date of publication:
**01.05.2024 Bulletin 2024/18**

(21) Application number: **22203818.4**

(22) Date of filing: **26.10.2022**

(51) International Patent Classification (IPC):
***H01M 8/0606*** *(2016.01)* ***B01J 7/00*** *(2006.01)*
***B01J 23/40*** *(2006.01)* ***B01J 27/185*** *(2006.01)*
***H01M 8/0612*** *(2016.01)* ***C01B 3/00*** *(2006.01)*
***C01B 3/40*** *(2006.01)*

(52) Cooperative Patent Classification (CPC):
**H01M 8/0606; B01J 7/00; B01J 21/04; B01J 23/42; B01J 35/23; B01J 37/0201; B01J 37/0205; B01J 37/18; B01J 37/28; C01B 3/0015; C01B 3/40; H01M 8/0631**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicants:
- **Umicore AG & Co. KG**
  **63457 Hanau-Wolfgang (DE)**
- **Friedrich-Alexander-Universität Erlangen-Nürnberg**
  **91054 Erlangen (DE)**

(72) Inventors:
- **Ellert, Abelina**
  **91058 Erlangen (DE)**
- **Schuehle, Patrick**
  **91058 Erlangen (DE)**
- **Wasserscheid, Peter**
  **91054 Erlangen (DE)**
- **Janssens, Ton V.W.**
  **2880 Bagsværd (DK)**

(74) Representative: **Retzow, Stefan**
**Umicore AG & Co. KG**
**Patente**
**Rodenbacher Chaussee 4**
**63457 Hanau-Wolfgang (DE)**


(54) **PHOSPHORUS DOPED PGM-TYPE CATALYSTS AND CATALYTIC SYSTEM FOR STORING AND RELEASING OF HYDROGEN OF ORGANIC HYDROGEN CARRIERS**


(57) The present invention is directed to catalysts and their production which can be used to hydrogenate and dehydrogenate an organic hydrogen carrier compound. The catalysts is composed of a specially phosphorus doped PGM-type catalyst. It can be used to store and release hydrogen upon demand, e.g. for usage in fuel cells of electrically propelled vehicles. Likewise, an apparatus comprising the inventive catalyst and its use is contemplated.


Fig. 1

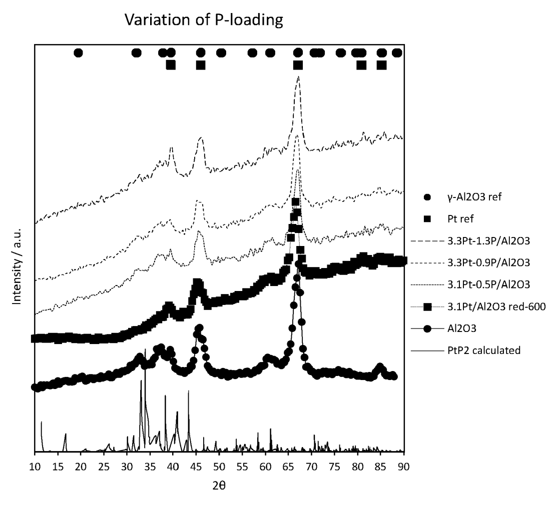


EP 4 362 146 A1

## Description

The present invention is directed to catalysts and their production which can be used to hydrogenate and dehydrogenate an organic hydrogen carrier compound. The catalysts are composed of a special phosphorus doped PGM-type catalyst. It can be used to store and release hydrogen upon demand, e.g. for usage in fuel cells of electrically propelled vehicles. Likewise, an apparatus comprising the inventive catalyst and its use is contemplated.

Within the concept of the "Green Deal"-campaign of the EU decarbonization of mobility is one major pillar. Several aspects in this connection have already been addressed and intensively discussed in the art (https://europa.eu/news-room/content/presentation-efficient-and-green-mobility-package_en). When talking about carbonless propulsion of vehicles hydrogen fuel is often mentioned as a promising energy carrier, in particular if the hydrogen is produced by sustainable sources, like wind or solar energy production.

Hydrogen is found in the first group and the first period in the periodic table, i.e. it is the lightest element. Hydrogen is rarely found in its pure form in the atmosphere. In a flame of pure hydrogen burning in air, the hydrogen ($H_2$) reacts with oxygen ($O_2$) to form water ($H_2O$) with the release of energy.

$$2H2(g) + O_2(g) \rightarrow 2H_2O\ (g) + energy$$

In atmospheric air rather than pure oxygen, hydrogen combustion may yield small amounts of nitrogen oxides with the water vapor.

On a weight basis, the heat of combustion of hydrogen gas is about three times that of hydrocarbon-based fuels, making it an efficient and attractive energy carrier. However, as a consequence of the very low density of hydrogen gas, the volume-based energy density is low, compared to hydrocarbon fuels.

Hydrogen fuel is a zero-carbon fuel when burned with oxygen. It can be used in fuel cells or internal combustion engines (e.g. HICEV). Regarding hydrogen propelled vehicles, hydrogen has begun to be used in commercial fuel cell vehicles such as passenger cars, and has been used in fuel cell buses for many years.

Fuel cells, in particular proton-exchange membrane fuel cells (PEMFC), also known as polymer electrolyte membrane (PEM) fuel cells, are developed mainly for transport applications. Their distinguishing features include lower temperature/pressure ranges (50°C to 100°C) and a special proton-conducting polymer electrolyte membrane (https://en.wikipedia.org/w/index.php?title=Proton-exchange membrane fuel cell&oldid=1064212583). A proton-exchange membrane fuel cell transforms the chemical energy liberated during the electrochemical reaction of hydrogen and oxygen to electrical energy, as opposed to the direct combustion of hydrogen and oxygen gases to produce thermal energy. A stream of hydrogen is delivered to the anode side of the membrane electrode assembly (MEA). At the anode side it is catalytically split into protons and electrons. This oxidation half-cell reaction or hydrogen oxidation reaction (HOR) is represented by:

$$H_2 \rightarrow 2H^+ + 2e^-$$

The newly formed protons permeate through the polymer electrolyte membrane (PEM) to the cathode side. The electrons travel along an external load circuit to the cathode side of the MEA, thus creating the current output of the fuel cell. Meanwhile, a stream of oxygen is delivered to the cathode side of the MEA. At the cathode side oxygen molecules react with the protons permeating through the polymer electrolyte membrane and the electrons arriving through the external circuit to form water molecules. This reduction half-cell reaction or oxygen reduction reaction (ORR) is represented by: $\frac{1}{2}O_2 + 2H^+ + 2e^- \rightarrow H_2O$

In order to provide hydrogen to a fuel cell, e.g. in a mobile application, the storage of hydrogen for the intended use is one of the major technical challenges ahead. Methods of storing hydrogen encompass mechanical approaches such as high pressures and low temperatures, or chemical compounds that release $H_2$ upon demand. Interest in using hydrogen for on-board storage of energy in zero-emissions vehicles is motivating the development of new methods of storage, more adapted to this new application. The over-arching challenge is the very low boiling point of hydrogen: it boils around -253°C. Achieving such low temperatures requires significant energy.

To date several methods exist which allow storing hydrogen. Compressed or liquefied hydrogen is a storage form whereby hydrogen gas is kept under pressure to increase the storage density. Compressed hydrogen in hydrogen tanks at 350 bar (5,000 psi) and 700 bar (10,000 psi) is used for hydrogen tank systems in vehicles. Another form of storing hydrogen is to chemically bind it to a carrier. Metal hydrides, ammonia and liquid organic carriers as well as others are vitally discussed as promising solutions, in particular for mobile hydrogen storage applications.

Liquid organic compounds that can be used to store hydrogen are called Liquid Organic Hydrogen Carriers

(LOHCs). These are unsaturated organic compounds that can store useful amounts of hydrogen, and release the stored hydrogen on demand. These LOHCs are hydrogenated for storage and dehydrogenated again when the hydrogen is needed, e.g. for a fuel cell. Using LOHCs, relatively high gravimetric storage densities can be reached (about 7 wt-% $H_2$ per LOHC), with a volumetric density about double of that of 700 bar $H_2$, and comparable to liquid $H_2$.

The functioning of an LOHC is described as follows. The low-energy form of the LOHC is reversibly converted by means of hydrogenation by hydrogen into the energy-rich form, which, in a reverse reaction, recovers hydrogen from the hydrogenated product with the formation of the low-energy form merely by a temperature increase and/or reduction of the hydrogen pressure. The reaction is therefore reversible. Reversible means, that the materials undergo a transformation from the low-energy dehydrogenated state to an energy-rich hydrogenated state and then back to the low-energy dehydrogenated state, without a significant loss of the LOHC material. In an optimal case, these reversible steps can be repeated indefinitely. The reaction can be performed in flow-through reactors, packed bed reactors, stirred reactors, to produce the hydrogen and the dehydrated LOHC, or in a batch reactor. In batch reactors, it is possible to perform the hydrogenation and dehydrogenation steps on the same LOHC load, without the need for reloading the LOHC after dehydrogenation.

In practice, both the hydrogenation and dehydrogenation reactions require a catalyst. The hydrogenation and dehydrogenation reactions can be conducted in different locations, and in this way the LOHC materials provide a method to transport energy in the form of hydrogen over larger distances, without any loss or consumption of hydrogen or the LOHC materials. Particularly, advantageously usable LOHCs allow this reversible conversion under technically relevant conditions, pressure and temperature being mentioned by way of example.

Several patents and patent applications already teach the use of LOHC in connection with fuel cell applications (WO2020120261A1, WO2020064222A1, WO2018228895A1, DE102017201451A1, US2016061383AA, DE102012004444A1). LOHC is taken to mean a group of chemical materials, such as are described in Energy Environ. Sci., 2011, 4, 2767 or US20100081034AA or Huang, et al., J. Am. Chem. Soc, 2009, 131 (39), pp 13898-13899, and Fang, et al. J Am. Chem. Soc, 2009, 131 (42), pp 15330-15338 as well as https://en.wikipedia.org/w/index.php?title=Liquid organic hydrogen carriers&oldid=1071399187 or https://en.wikipedia.org/w/index.php?title=Hydrogen storage&oldid=1080342247.

Further LOHC systems are known to date. LOHC systems are often based on cyclic hydrocarbon molecules (Heublein, N. et al. International Journal of Hydrogen Energy 2020, 45 (46), 24902-24916 https://doi.org/10.1016/j.ijhydene.2020.04.274; Kwak et al., Energy Conversion and Management, 2021, 239, 114124 https://doi.org/10.1016/j.enconman.2021.114124). A first reference is made to polycyclic aromatic hydrocarbons that are used today as industrial heat transfer liquids like dibenzyl toluene, benzyl toluene, e.g. known under the trademark Marlotherm® or their isomeric mixtures (scheme 1).

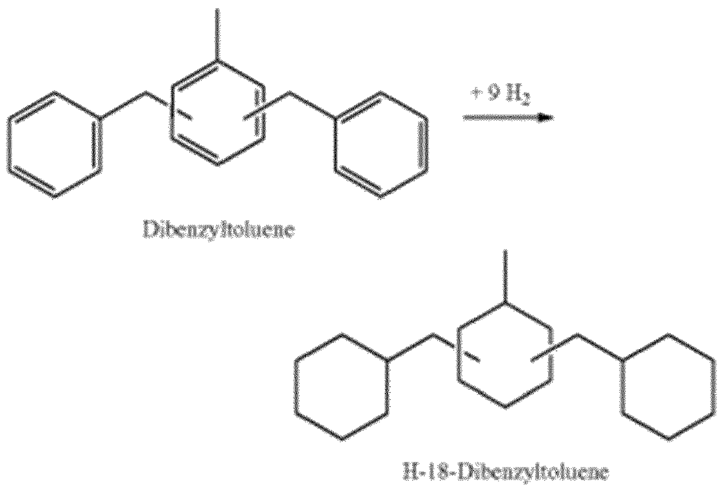


Dibenzyltoluene

H-18-Dibenzyltoluene

*Scheme 1: Special LOHCs*

The method and the arrangement are aimed at the safe and technically simple supply to various kinds of vehicles, like for example motor vehicles, buses, lorries, forklifts, ships, trains, etc., collectively called "vehicle", with pure hydrogen. There is therefore the advantage of not reequipping filling stations for operation at very low temperatures or very high pressures with high expenditure (like in cases of liquid hydrogen), but continuing to use the existing infrastructure and storing hydrogen in the form of LOHC, which is much less flammable and much easier to handle, as compared to

compressed or liquefied $H_2$.

It was demonstrated that replacing hydrocarbons by heteroatoms, like N, O etc. improves reversible de/hydrogenation properties (Xie, Y., Milstein, D. ACS Appl. Energy Mater. 2019, 2 (6), 4302-4308 https://doi.org/10.1021/acsaem.9b00523; Jorschick, H. et al. Sustainable Energy Fuels 2021, 5 (5), 1311-1346 https://doi.org/10.1039/D0SE01369B). Reference is to be made here to the hydrogenation/dehydrogenation of N-ethylcarbazole (NEC). In this case, N-ethylcarbazole (NEC) as the low-energy form is converted to the perhydro form (H12-NEC) as the energy-rich form according to the following reaction plan (scheme 2).

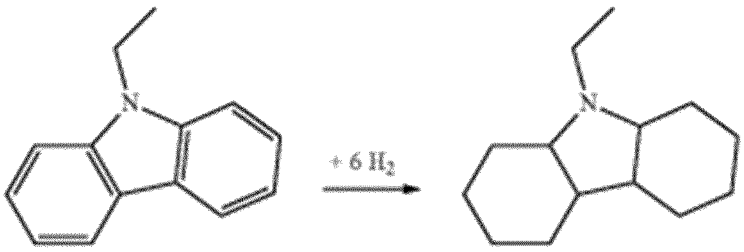


N-Ethylcarbazole H12-N-Ethylcarbazole

*Scheme 2: Special N-heterocyclic LOHCs*

H12-NEC is a liquid that can be stored at ambient temperature and ambient pressure. The storage density for hydrogen according to this reaction is approximately twice as high in terms of volume as in a 700 bar tank filled with hydrogen. The tank can adopt any form, in contrast to a pressure container, which makes it easier to accommodate in a technical application.

The dehydrogenation of LOHCs is an endothermic process which runs at feasible rates only at elevated temperatures. In any case, the endothermic character of the dehydrogenation reaction has a negative effect on the overall efficiency of an LOHC system: the release of hydrogen from an LOHC requires a continuous supply of energy (heat) to the reactor in order to keep the reaction going. Hence, the heat management in an LOHC system is crucial in order to heat the LOHC reactor for generation of sufficient hydrogen to be provided for the production of electricity in a fuel cell. There exist several approaches to this extent. A first approach is direct electric heating of a catalytic element comprising a catalytically active layer on top of a heater element or conductor material (US2011265738A, US2011268651A). In certain designs, the electric power required is extracted from the fuel cell (US2015056526A), or the electricity from the fuel cell is used to heat up a heat transfer medium, which is connected to the LOHC reactor via a heat exchanger (CN108940150A). Another approach is to install burners to generate heat by burning $H_2$ directly (KR20210120577A), or by burning additives, such as biofuel, fossil fuel, methanol, (bio-) ethanol, contained in the LOHC fluid (DE102014006430A1). Yet another approach is the use of heat pumps (CN112768724A).

As already explained, the hydrogenation and dehydrogenation processes in the LOHC cycle require suitable catalysts. These catalysts can be heterogeneous catalysts or homogeneous catalysts. The best known catalysts to date are heterogeneous catalysts, containing metal particles on an oxidic support. The metals are typically chosen from the group, but not limited to Ni, Co, Pd, Pt, Rh, Ru, Pd, Ir, Re. Examples for oxidic supports are alumina, titania, silica, ceria etc. These catalysts can, in principle, be used for both the hydrogenation and dehydrogenation part of the LOHC cycle, albeit that Ni is primarily used for the hydrogenation. Using combinations of metals, alloys, and a combination of catalyst supports can also result in suitable catalysts.

For hydrogenation or dehydrogenation of organic molecules precious metal catalysts provide a long chemical history. Also heteroatom-doped precious metal catalyst have already been developed. E.g., Pd(111)-P model catalyst have been proposed in cyclohexene dehydrogenation. The P-modification leads to increased deactivation barrier and by that less decomposition of benzene which improves catalyst stability, lower rates compared to pure Pd-catalyst (Sampath, A., & Flaherty, D. W. (2020), Effects of phosphorus addition on selectivity and stability of Pd model catalysts during cyclohexene dehydrogenation. Catalysis Science & Technology, 10(4), 993-1005). Furthermore, Ouma et al. studied Si, P, S and Se surface additives as Pt(111)-catalytic activity boosters for dehydrogenation of methylcyclohexane to toluene (Ouma, C. N., Obodo, K. O., Modisha, P. M., & Bessarabov, D. (2022); Si, P, S and Se surface additives as catalytic activity boosters for dehydrogenation of methylcyclohexane to toluene - A liquid organic hydrogen carrier system: Density functional theory insights; Materials Chemistry and Physics, 279, 125728).

In addition, $PtP_2$ nanoparticles on $SiO_2$ show high selectivity but low activity in propene and acetylene hydrogenation, as well as propane dehydrogenation. The P:Pt molar ratios vary from 10 to 50. The catalysts have been

obtained by impregnation of the solid support with Pt followed by calcination at 225°C. The latter was impregnated with $H_3PO_4$ followed by calcination at 600°C, and reduction with hydrogen at 550°C, leading to the formation of a crystalline $PtP_2$ phase, as verified by the characteristic X-ray diffraction pattern for that compound (J. T. Miller et al., Structural and Catalytic Properties of Isolated Pt2+ Sites in Platinum Phosphide (PtP2); ACS Catalysis, 11(21), (2021), 13496-13509).

Besides Pt, crystalline $Ru_2P$-based catalysts are also known for hydrogenation and dehydrogenation reactions. For the hydrogenation of toluene to methyl cyclohexene, crystalline $Ru_2P$ supported on $SiO_2$ showed a significantly higher activity for this reaction, as compared to the corresponding Ru catalyst without phosphorus (Furukawa, S.; Matsunami, Y.; Hamada, I.; Hashimoto, Y.; Sato, Y.; Komatsu, T. Remarkable Enhancement in Hydrogenation Ability by Phosphidation of Ruthenium: Specific Surface Structure Having Unique Ru Ensembles. ACS Catal. 2018, 8 (9), 8177-8181. https://doi.org/10.1021/acscatal.8b02582). In this case, the crystallinity of the $Ru_2P$ phase was determined by High Resolution Transmission Electron Microscopy (HR-TEM). In contrast, the same publication also teaches that the activity for hydrogenation of toluene of the phosphides of Pt, Pd, Ir, Rh is lower than that of the corresponding catalysts without phosphorus.

Similarly, crystalline $Ru_2P$, as verified by HR-TEM, supported on $SiO_2$ is also a known catalyst for the dehydrogenation of propane (Ma, R.; Yang, T.; Gao, J.; Kou, J.; Chen, J. Z.; He, Y.; Miller, J. T.; Li, D. Composition Tuning of Ru-Based Phosphide for Enhanced Propane Selective Dehydrogenation. ACS Catal. 2020, 10.). Crystalline $Ru_2P$ supported on active carbon has also been shown to be a catalyst for the hydrogenation and dehydrogenation of N-heterocyclic compounds (Shao, F. Geometric and Electronic Effects on the Performance of a Bifunctional Ru2P Catalyst in the Hydrogenation and Acceptorless Dehydrogenation of N-Heteroarenes. Chinese Journal of Catalysis 2021, 10). It is noted that the presence of the crystalline $Ru_2P$ phase in these catalysts is essential for their catalytic properties.

The low reactivity, the high reaction temperatures required and the pressure conditions applied are a limitation in the applicability of carbon-containing molecules as hydrogen storage and is incompatible with the operative temperature of e.g. traditional PEM fuel cells. Therefore, it is still an object to find more and better catalysts that allow to further lower the temperature needed for the hydrogenation/dehydrogenation process of LOHC based catalytic systems in order to make the whole process more energy efficient and compatible with e.g. fuel cell implementation. Moreover, the catalysts applied should be stable and robust in use, should be easily made and should provide for a less complex mode of performing hydrogenation and dehydrogenation using LOHCs in connection with fuel cells, in particular PEMs, for producing electricity.

These and other objectives apparent to the skilled user are achieved by providing a phosphorus-doped PGM-type catalyst and a catalytic system comprising the said catalyst according to claims 1 and 7, respectively. Dependent claims of said claims are directed to preferred aspects of the catalyst/catalytic system. Claims 8-12 are pointing at inventive processes for the production of such a catalyst. Claims 13 - 17 are directed to an inventive catalytic system. Claim 18 is directed to an apparatus to produce electricity and claim 19 protects a use of the inventive catalytic system.

By providing a phosphorus-doped platinum group metal (PGM)-type catalyst for the hydrogenation and dehydrogenation of organic hydrogen carrier molecules, in particular liquid hydrogen carrier compounds, in which the catalyst is supported on a solid support material, the phosphorus has an average formal oxidation state of $\leq 2$ and is present in a molar PGM:P-ratio x of $0.1 < x < 10$, while not comprising a crystalline phosphide phase, and wherein the PGM is selected from the group consisting of Pt, Pd, Ru, Ir, Rh, and mixtures thereof, the objectives are achieved in a very easy but nonetheless superior manner. Oxidation states of the phosphorus can be measured by known techniques, for example X-ray photoelectron spectroscopy, a chemical identification of the phosphorus phases present in the catalyst (Kim, S. S.; Britcher, L.; Kumar, S.; Griesser, H. J. XPS Study of Sulfur and Phosphorus Compounds with Different Oxidation States. JSM 2018, 47 (8), 1913-1922. https://doi.org/10.17576/jsm-2018-4708-33). The PGM:P ratio can be determined by standard chemical analysis methods known by a skilled person, such as for example Inductively Coupled Plasma Optical Emission Spectroscopy (ICP-OES). Through doping of the supported PGM-type catalyst with a certain amount of phosphorus atoms, according to the invention, the rate of hydrogenation and in particular dehydrogenation reaction of organic molecules like perhydro benzyl toluene (H12-BT) is surprisingly increased, such that a given degree of dehydrogenation above 50% can be reached in at least 20% shorter period. This is all but obvious in light of the known prior art.

In the present invention a PGM-catalyst is doped with a certain amount of phosphorus. This leads to an increase of the catalytic activity, and makes it a feasible catalyst for the hydrogenation and dehydrogenation of organic hydrogen carrier molecules, in particular liquid organic hydrogen carrier molecules. The formal oxidation state of the phosphorus in this kind of composition is on average less than in phosphate ($PO_4^{3-}$) or phosphite ($PO_3^{3-}$), indicating that the phosphorus is partially reduced, when it is added as a phosphate or phosphite under reducing conditions. It is believed that the reduction will most probably not be to the formal oxidation state -3 on average, as the then existing $PH_3$-species bound to a solid PGM surface are known to be unstable under the high temperatures involved. Hence, preferably the formal oxidation state on average of the phosphor atoms present will be somewhere between -3 and 2, most preferably -2 and 2 and utmost preferably between 0 and 2.

It is believed that the phosphorus dopants can act upon the PGM-type catalyst by occupying certain positions

on the outer spheres of the PGM-containing particles, which typically are located on the surface of a high-surface area solid support material, which are commonly known in the field of heterogeneous catalysis. Phosphorus dopants on the surface of PGM-containing particles can be expected to influence the catalytic activity, which, according to the present invention, turns out to be towards a higher activity. Another possibility is that the phosphorus dopants are located directly on the surface of a high-surface area, which can hinder the sintering of PGM particles, thus contributing to the catalyst stability of phosphorus-doped catalysts.

The platinum group metal (PGM) type catalyst used within the concept of the present invention is a typical catalyst that is well known in various applications of heterogeneous catalysis, e.g. automotive exhaust treatment catalysts, emission control catalysts for stationary sources, and hydrogenation, dehydrogenation and oxidation reactions in large-scale chemical processes . Normally, the platinum group metal in question is deposited on the solid support material, such as, but not limited to, alumina, titania, ceria, silica, zirconia, and combinations thereof, by methods known to the skilled person (Heterogeneous Catalysis and Solid Catalysts, Ullmann Encyclopedia 2009, Wiley-VCH Verlag GmbH & Co. KGaA, Weinheim, p. 47 et seq.).

The solid support materials are the materials where the active PGM metal particles are located. These can be powders, powders processed to catalyst products (see paragraph below), or pre-shaped or pre-formed solid bodies ('articles'). Solid support materials in powder form are all those which can be used in this instance (e.g. in Heterogeneous Catalysis and Solid Catalysts, Ullmann Encyclopedia 2009, Wiley-VCH Verlag GmbH & Co. KGaA, Weinheim, p. 36 et seq.). Usually, these are high surface area metal oxides which are to some extent stable against higher temperatures, which may occur in the envisaged reactions. Other types, such as carbon, carbides, nitrides, phosphates are also possible solid support materials in powder form. The sizes of the powder particles are typically in the range of 0.1-500 μm, preferably 1 - 100 μm (ISO 13320-1 - newest version as of date of application). In particular, support materials have a BET surface of from 30 to 250 $m^2/g$, preferably of 100 to 200 $m^2/g$ (determined according to German standard DIN 66132 - newest version as of date of application). Preferred materials in this connection are e.g. alumina, alumina/silica mixed oxides, magnesia/alumina mixed oxides, ceria and ceria/zirconia mixed oxides, ceria/alumina mixed oxides, cordierite, silicon carbide, aluminum titanate, cordierite-alumina, silicon nitride, zircon mullite, carbon, spodumene, alumina-silica magnesia, zircon silicate, sillimanite, a magnesium silicate, zircon, petalite, silicalite, alumina, aluminosilicates, silicon-aluminum phosphates, and the like. Most preferred are those selected from the group consisting of alumina, silica, magnesia, titania, zirconia, ceria, mixtures comprising at least two of these materials and mixed oxides comprising at least two of these materials. Mixed oxides are in particular solid solutions. The solid support material is most preferably selected from the group consisting of alumina, zirconia, titania, ceria, SiC, AlTi, cordierite or mixtures or composites thereof. In case alumina is used, it is preferably stabilized, for example with 1 to 6 weight percent, in particular around 4 weight percent, of lanthana, silica or baria.

These powders can be processed to catalyst products of different forms, such as pellets, rings, extrudates like e.g. flow-through or wall-flow monoliths, spheres, hollow spheres, granulates. The sizes of these products typically varies from approximately 1 mm to 5 cm. Such catalyst products may contain holes (Synthesis of Solid Catalysts; de Jong, K. P. (Ed. ), Ed.; Wiley-VCH: Weinheim, 2009, Chapter 9).The powder support materials may be processed before adding the PGM components. In this case, the selected one or more platinum group metals are deposited on such pre-formed solid support material by methods known to the skilled person (Heterogeneous Catalysis and Solid Catalysts, Ullmann Encyclopedia 2009, Wiley-VCH Verlag GmbH & Co. KGaA, Weinheim, p. 47 et seq; Synthesis of Solid Catalysts; de Jong, K. P. (Ed. ), Ed.; Wiley-VCH: Weinheim, 2009, Chapters 3-8). In a second procedure, the powders are processed to catalyst products after the selected platinum group metals are deposited by methods known to the skilled person (Synthesis of Solid Catalysts; de Jong, K. P. (Ed. ), Ed.; Wiley-VCH: Weinheim, 2009, Chapters 3-9). The PGM-containing solid support material in powder form can also be processed to catalytic products like ceramic foams, 3D-printed forms, porous ceramic filters, in the size range 1-500 cm (H. B. Friedrich et al., Monoliths: A Review of the Basics, Preparation Methods and Their Relevance to Oxidation, Catalysts (2017), 7, 62). In a third procedure, the procedures mentioned here are combined, such that a solid support material in the form of a powder containing platinum group metals are processed to a catalytic products, followed by deposition of a second portion of the same or a different platinum group metal by methods known to the skilled person (Synthesis of Solid Catalysts; de Jong, K. P. (Ed. ), Ed.; Wiley-VCH: Weinheim, 2009, Chapters 3-9).

In another embodiment, the PGM-containing solid support material in powder form is processed to a catalytic article by applying it to the accessible surface of pre-shaped articles, such as flow-through monoliths, wall-flow filters or corrugated monoliths as known from exhaust treatment catalysts in automotive applications, plates, mesh, wires, other preformed bodies, glass wool, metal wool, by e.g. washcoating, deposition methods, or any other method designed to fix the solid support material to the outer surface of solid bodies (Avila et al., Chem. Eng. J. (2005), 109, 11 - 36). The pre-shaped articles can in principle be of any solid material, such as metals, oxidic materials, ceramic materials, glassfiber, polymers. Such articles are often based on fiber materials or powder materials that are pre-shaped in a solid body by using appropriate binders, coatings, glues (H. B. Friedrich et al., Monoliths: A Review of the Basics, Preparation Methods and Their Relevance to Oxidation, Catalysts (2017), 7, 62).

The PGMs can also be supported directly on articles as solid support materials, such as the aforementioned solid pre-shaped articles, forms and bodies. In a typical method to produce such articles, these articles are contacted with e.g. solutions of platinum group metals according to processes known to the skilled worker (Heterogeneous Catalysis and Solid Catalysts, Ullmann Encyclopedia 2009, Wiley-VCH Verlag GmbH & Co. KGaA, Weinheim, p. 47 et seq; Synthesis of Solid Catalysts; de Jong, K. P. (Ed. ), Ed.; Wiley-VCH: Weinheim, 2009, Chapters 3-8.). By this measure the PGMs are deposited onto the article in small clusters. These are then normally fixed to the outer surface of the article, or inside the porous structure of the article, by drying and calcining procedures.

PGMs which are appropriate for the invention have been identified before. In a preferred aspect the PGMs are Pt and/or Pd. In a very preferred manner, Pt is the only PGM used within the ambit of the invention.

Flow-through monoliths have fine, parallel gas flow passages extending from an inlet to an outlet face of the substrate, such that passages are open for fluid flow. The passages, which are essentially straight paths from their fluid inlet to their fluid outlet, are defined by walls. The catalytic material can be coated as a washcoat, so that the gases flowing through the passages come in contact with the catalytic material. The flow passages of the monolithic substrate are thin-walled channels, which can be of any suitable cross-sectional shape and size such as trapezoidal, rectangular, square, sinusoidal, hexagonal, oval, circular, etc. Such structures may contain from about 20 - 900 or more gas inlet openings (i.e., cells) per square inch of cross section (3 - 140 cells/$cm^2$). The wall thicknesses, i.e. the thickness of the walls which separate the channels of the substrate from one another, are usually from about 0.005 cm to about 0.3 cm. Flow-through monoliths have a porosity of more than 20%, generally from 20% to 70%, in particular from 35% to 65% [measured according to DIN 66133 - newest version as of the application date]. The mean pore size is at least 1 $\mu$m, e.g. from 1.5 $\mu$m to 25 $\mu$m, preferably more than 3 $\mu$m, in particular from 5 $\mu$m to 18 $\mu$m [measured according to DIN 66134 - newest version as of the application date].

Wall-flow filters are made up of a multiple number of parallel channels formed by porous walls. The channels are alternately sealed at one of the two ends of the filter so that channels A, which are open at the first side of the filter and sealed at the second side of the filter, and channels B, which are sealed at the first side of the filter and open at the second side of the filter, are formed. For example, a fluid flowing into channels A can only leave the filter via channels B and must flow-through the porous walls between channels A and B for this purpose. Finished substrates have a porosity of more than 40%, generally from 40% to 75%, in particular from 45% to 70% [measured according to DIN 66133 - newest version as of the application date]. The mean pore size is at least 7 $\mu$m, e.g. from 7 $\mu$m to 34 $\mu$m, preferably more than 10 $\mu$m, in particular from 10 $\mu$m to 20 $\mu$m or from [measured according to DIN 66134 - newest version as of the application date].

A corrugated monolith consists of alternating layers of flat and wavy sheets with regular curved folds or grooves. (see Figure 2). Through winding or stacking of the combined flat and wavy sheets to a desired form, channels are created in the wavy layer of the article. In principle, such a structure can be made of any material that can be formed, combined to, and retain such a structure, e.g metal, ceramics, paper sheets, polymers, glass fiber sheets. To stabilize the structure, one or more further processing steps may be necessary, such as welding, soldering, glue, coating, heating. Such corrugated substrates and their manufacture are disclosed in WO2010066345A1, and the teaching thereof can be applied to the present invention without departing from the scope of the claims. By applying a catalytically active material on the surface of the channels or in the porous structure of these materials, a corrugated catalytic article is obtained.

A preferred embodiment of a corrugated catalytic article is a corrugated article based on a glass fiber substrate. The glass fiber substrate has a wall density of at least 50 g/l but not more than 150 g/l and a porosity of at least 50%. The substrate monolith consists of sheets of high silica content glass or a sheet of E-glass fiber. High silica content glass sheets may optionally comprise a layer of a metal oxide, such as alumina, silica, $TiO_2$ or diatomaceous earth to stabilize the structure. In the present invention, a phosphorus doped PGM catalyst, according to the invention, supported on a powder support is applied on the surface of the wavy and flat sheets of the article. In another embodiment, a phosphorus doped PGM catalyst, according to the invention, supporting on a powder support, is applied inside the porous structure of the glass fiber material that constitute the wavy and flat sheets of the article. In yet another embodiment, the unsupported PGM metal and the phosphorus are applied directly on the wavy and flat sheets. In a typical method to produce such glass fiber articles, these articles are contacted with e.g. solutions of platinum group metals according to processes known to the skilled worker (Heterogeneous Catalysis and Solid Catalysts, Ullmann Encyclopedia 2009, Wiley-VCH Verlag GmbH & Co. KGaA, Weinheim, p. 47 et seq; Synthesis of Solid Catalysts; de Jong, K. P. (Ed. ), Ed.; Wiley-VCH: Weinheim, 2009, Chapters 3-8.). By this measure the PGMs are deposited onto the article in small clusters. The PGM clusters can be fixed to the outer surface of the glass fiber walls, or inside the porous structure of the glass fiber walls, by appropriate drying and calcining procedures known to a skilled person.

The amount of PGM used to be supported onto the solid support material or articles can be chosen by those skilled in the art. The chosen amount should be as low as possible to provide sufficient catalytic activity takes place, as excessive amounts of PGMs make the catalyst too expensive. Normally, the amount of PGM per weight of solid support material is in the range of from 0.01 - 8.0 wt.-%, preferably 0.1 - 6.0 wt-% and most preferably 0.3 - 5.0 wt.-%.

The deposited PGMs on the solid support material are typically present in small clusters in the nanometer

range. In heterogeneous catalysis the activity of catalysts is determined by the total surface area of these small clusters, such that a larger the surface area results in a higher activity. Because small clusters provide a larger surface area, and therefore, a higher catalytic activity, small clusters are often preferred in catalysts. However, there is a lower limit for the diameters of the PGM-clusters. For particles with a diameter below 1-1.5 nm, dependent on the metal used, quantum effects already take place, which may result in a decrease of the catalytic activity envisaged. The skilled person knows which range of diameters of the deposited PGM-clusters work best for instant invention. E.g., the PGM-type catalysts comprises the PGM clusters on the solid support material in a scale y of from $1.0\ nm \leq y \leq 50\ nm$. The particle size is determined from the CO adsorption capacity of the catalyst, which is measured by CO pulse chemisorption under appropriate conditions for the catalyst, which are known to a skilled person (Tanabe, T.; Nagai, Y.; Hirabayashi, T.; Takagi, N.; Dohmae, K.; Takahashi, N.; Matsumoto, S.; Shinjoh, H.; Kondo, J. N.; Schouten, J. C.; Brongersma, H. H. Low Temperature CO Pulse Adsorption for the Determination of Pt Particle Size in a Pt/Cerium-Based Oxide Catalyst. Applied Catalysis A: General 2009, 370 (1-2), 108-113. https://doi.org/10.1016/j.apcata.2009.09.030). Preferably, the diameter of the deposited PGM-type catalyst y is from $1.5\ nm \leq y \leq 20\ nm$, most preferably $2.0 \leq y \leq 10$ nm, most preferably $2.0 \leq y \leq 5.0$ nm.

To produce the phosphorus-doped catalyst, the PGM clusters fixed to the solid support material are then contacted with a phosphorus species and held under reducing conditions for e.g. at least 1h at ≥ 450°C to generate the phosphorus-doped PGM-type catalyst. The phosphorus compound is used in an amount to obtain the above-mentioned molar PGM:P-ratio x of $0.1 \leq x \leq 10$, preferably $0.3 \leq x \leq 5$, more preferably $0.4 \leq x \leq 2$, and most preferably $0.5 \leq x \leq 1$. It is explicitly stressed that the phosphorus-doped PGM-type catalyst does not comprise phosphide phases such as those of the type $XP_2$ wherein X is the PGM mentioned above. In particular, the X-ray diffraction of the catalysts of the invention do not show the characteristic features for a crystalline $PtP_2$ phase (see Fig. 1), indicating the absence of $PtP_2$.

Besides this, the phosphorus-doped PGM-type catalyst can comprise further promotor or inhibiter atoms. These are known to the skilled person. They may promote the reduction or oxidation of the organic hydrogen carrier molecules in question or inhibit unwanted side-reactions like e.g. decomposition of the organic hydrogen carrier. Hence, in a preferred aspect, the phosphorus doped PGM-type catalyst comprises further dopants selected from the group consisting of S, Se, Si, and most preferably S.

The phosphorus doped PGM-type catalyst of the present invention can be obtained by a first process, in which:

i) at least one PGM is supported on a solid support material;
ii) contacting it with a salt or an acid of an oxide of phosphorus; and
iii) subsequently treating it with a reducing agent at temperatures of ≥ 450°C.

Steps i) and ii) can be conducted sequentially, i.e. i) first and ii) secondly. However, the steps i) and ii) in the process of the invention can also be conducted simultaneously by contacting a support material with a solution containing a PGM-precursor and a salt or an acid of an oxide of phosphorus.

Subsequently, the obtained material is treated with a reducing agent at a temperature of ≥ 450°C.

As already indicated, the deposition of at least one PGM onto the surface of a solid support material is readily known to the skilled worker already from the field of generating catalyst for e.g. automotive exhaust treatment applications. The deposition can be done favorably by e.g. incipient wetness techniques, wet impregnation, nanoparticle deposition or deposition precipitation from a solution of the PGMs (Chattopadhyay, S. Review on Monolithic Ceramic Catalysts in Different Applications Support Materials, Incorporation Techniques and Physical Properties, Topical Reviews (2005), Vol. 65(4), p. 179 et seq.). In a preferred manner, the deposition of the PGMs onto the surface area of the solid support material is conducted via incipient wetness impregnation (https://en.wikipedia.org/w/index.php?title=Incipient_wetness_impregnation&oldid=946130465) or precipitation technique, such as deposition precipitation, (http://www.fhi-berlin.mpg.de/acnew/department/pages/teaching/pages/teaching_wintersemester_2006_2007/koehler_preparation_supported_catalysts_111006.pdf).

In a typical procedure for deposition precipitation, e.g. an aqueous solution of the PGM is contacted with the solid support material. Through an appropriate change of the pH, the PGMs become insoluble and deposit onto the surface of the solid support material and inside the pores of the solid support material. Then, the material is dried and calcined to fix the PGM to the solid support material. This drying and calcination can be done by the skilled worker. The specific calcination temperature depends on the PGM metal, and the specific compounds in the precursor solution, and deposition conditions. Typically, calcination is performed at 200- 600°C, more preferably at 250 - 500°C and most preferably around 300- 450°C. Often, the gas atmosphere in the calcination step is plain air, but variations can be applied. Such variations include the absence or variation of the partial pressure of oxygen and water, and the addition of one or more auxiliary gases such as hydrogen, carbon monoxide, ammonia, NO, methanol, ethanol, or other small organic molecules like $(C_1\text{-}C_3)$-alkanes and/or $(C_1\text{-}C_3)$-alkenes.

Solutions of PGMs that could be used in this instance are known to the skilled person (Preuster, P., Papp, C.,

& Wasserscheid, P. (2017). Liquid organic hydrogen carriers (LOHCs): toward a hydrogen-free hydrogen economy. Accounts of chemical research, 50(1), 74-85.). In a preferred manner, palladium and/or rhodium and/or platinum are used to generate the present PGM-type catalyst. Examples in the case of palladium include palladium; halides such as palladium chloride; inorganic salts such as nitrate and sulfate of palladium; carboxylates such as acetate of palladium; and hydroxides of palladium, halides; inorganic salts; carboxylates; and hydroxides of tetraammine palladium and hexammine palladium, alkoxides, dinitrodiammine palladium, and oxides. Preferable examples include nitrate, and nitrates; carboxylates; and hydroxides of dinitrodiammine palladium, tetraammine palladium and hexammine palladium, and more preferable examples include nitrate (palladium nitrate), and nitrates; carboxylates; and hydroxides of tetraammine palladium and hexammine palladium.

Examples in the case of platinum include platinum; halides such as platinum bromide and platinum chloride; inorganic salts such as a hexahydroxo acid salt, chloroplatinic acid (H2[PtCl6]) and a tetranitro acid salt of platinum; carboxylates such as acetate of platinum; and hydroxides of platinum, halides; inorganic salts; carboxylates; and hydroxides of tetraammine platinum and hexammine platinum; alkoxides, dinitrodiammine platinum, and oxides. Preferable examples include chloroplatinic acid (H2[PtCl6]) and nitrates, carboxylates, hydroxides, and hexahydroxo acid salts of dinitrodiammine platinum, tetraammine platinum, and hexammine platinum, and more preferable examples include chloroplatinic acid (H2[PtCl6]) and nitrates, carboxylates, hydroxides, and hexahydroxo acid salts of dinitrodiammine platinum, tetraammine platinum, and hexammine platinum.

Examples in the case of rhodium include rhodium; halides such as rhodium chloride; inorganic salts such as nitrates, sulfates, hexammine salts, and hexacyano acid salts of rhodium; carboxylates such as acetate of rhodium; and hydroxide of rhodium, alkoxides, and oxides. Preferable examples include nitrates and hexammine salts, and more preferable examples include nitrate, especially rhodium nitrate. The above described compounds of platinum group metals (PGM sources or precursor) in the present invention may be used solely or in a mixture of two or more compounds. In the case of mixing PGM sources or precursors, the same kinds of counterions are preferably used.

The PGM-containing material is prepared by contacting a support material with one or more PGM-containing solutions. Support materials are already discussed above. After the deposition of one or more PGM-particles on the solid support material by e.g. impregnation, incipient wetness impregnation, nanoparticle deposition and the like, the material is dried and optionally calcined as mentioned above.

In a next step, the phosphorus doping has to be conducted. In an embodiment of the invention, the phosphorus doping is conducted by contacting the PGM-containing material with a salt or acid of an oxide of phosphorus known to the skilled person. Preferred compounds in this respect are ammonium, alkali, alkaline earth or other metal salts of phosphorus oxides, like phosphates, phosphites or hypophosphites as well as the acids thereof. Even more preferred are the acids or salts derived from the acid of the oxide of phosphorus which are selected from the group consisting of phosphoric acid, phosphonic acid ($H_3PO_3$), hypophosphoric acid, diphosphoric acid. Most preferred are phosphonic acid and hypophosphoric acid and their respective salts in this respect. These precursors are contacted with the PGM-type catalyst preferably in the form of a solution. The concentration of this solution is such as to reach the required PGM:P-ratio (see above). Normally, the concentration of the precursor is in the range of 0.01 - 1000 mmol/L, more preferably 0.5 - 100 mmol/L and most preferably 1 - 10 mmol/L.

After having contacted the compounds mentioned above the mixture obtained is optionally dried and calcined again in order to fix the phosphorus compounds on the PGM-type catalysts. The skilled worker knows what temperatures are required. The calcination is performed preferably 100 to 800°C, more preferably 200 - 500°C and most preferably 300 - 450°C under flow of an oxidizing, a reducing or an inert gas.

The phosphorus precursors being now present on the PGM-type catalyst is treated in a final step with a reducing agent in order to reduce the formal oxidation state of the phosphorus to ≤ 2 as depicted above. This reduction can be performed according to those skilled in the art (Kou, J., et al., (2021). Structural and Catalytic Properties of Isolated Pt2+-Sites in Platinum Phosphide (PtP2), ACS Catalysis, 11(21), 13496-13509; Alvarado Rupflin, L. et al., Platinum group metal phosphides as heterogeneous catalysts for the gas-phase hydroformylation of small olefins, ACS Catalysis, (2017), 7(5), 3584-3590; Alvarado Rupflin, L. et al., Platinum group metal phosphides as efficient catalysts in hydroprocessing and syngas-related catalysis, Catalysts, (2018) 8(3), 122). Preferably, this can be done with reducing agents which are molecular hydrogen or a compound that produces hydrogen upon reaction with protons. These compounds are known to the skilled person (Beghi, G. E., Review of thermochemical hydrogen production, International Journal of Hydrogen Energy, (1981), 6(6), 555-566; https://en.wikipedia.org/wiki/Hydrogen#Discovery_and_use). In a preferred manner the reduction is performed under an atmosphere of hydrogen or a mixture of hydrogen and an inert gas, like e.g. argon or nitrogen.

The temperature of the reduction depends on the type of metal and reduction agent used and are known to a skilled person. The reduction is conducted at suitable temperatures, dependent on the reducing agent, typically above 300°C. Preferably, the reduction is conducted at temperatures of ≥ 450°C when hydrogen is used. More preferably, the reduction is done at temperatures of ≥ 500°C and most preferably the temperature of the reduction is set to ≥ 550°C. The upper limit of the temperature does not seem to be crucial although for reasons of efficiency it should not reach

more than 700°C, preferably not more than 650°C.

In an exemplified production process, the PGM-type catalyst is synthesized by first impregnating an oxidic support (e.g. $Al_2O_3$) with e.g. Pt using a suitable precursor (e.g. $H_2[PtCl_6]$, $Pt(NH_3)_4(NO_3)_2$, etc.). After impregnation (e.g. 16h stirring at RT), solvent ($H_2O$) removal, and calcination (e.g. 400°C, 2h, air), a subsequent impregnation with e.g. $H_3PO_3$ is performed. After the second impregnation (e.g. 16h stirring at RT) and solvent ($H_2O$) removal, the catalyst is reduced at e.g. 600°C with e.g. 10% $H_2$ in $N_2$ for 2h.

In an alternative process the phosphorus doped PGM-type catalyst of the present invention can also be obtained by a process, in which:

i) at least one PGM is supported on a solid support material;
ii) contacting it with a compound selected from the group consisting of $PH_3$, alkyl or aryl phosphines; and
iii) optionally contacting it with a reducing agent. Contacting the PGM on te solid support material with a phosphorus compound like depicted above will lead to phosphidation and reduction of the PGM at the same time. The compound containing phosphorus in a reduced state can also be obtained in-situ by decomposition of suitable precursor compounds (Sheng, Q.; Li, X.; Prins, R.; Liu, C.; Hao, Q.; Chen, S. Understanding the Reduction of Transition-Metal Phosphates to Transition-Metal Phosphides by Combining Temperature-Programmed Reduction and Infrared Spectroscopy. Angewandte Chemie International Edition 2021, 60 (20), 11180-11183. https://doi.org/10.1002/anie.202100767; Liu, D.; Li, X.; Wei, L.; Zhang, T.; Wang, A.; Liu, C.; Prins, R. Disproportionation of Hypophosphite and Phosphite. Dalton Trans. 2017, 46 (19), 6366-6378. https://doi.org/10.1039/C7DT00243B.).

In the alternative process of the invention, the phosphorus doping is conducted by contacting the PGM-containing material with a compound containing phosphorus in a reduced oxidation state. Preferred are organic or inorganic compounds selected from alkylphosphines, arylphosphines or phosphane ($PH_3$). The compound containing phosphorus in a reduced oxidation state can also be generated in-situ, e.g. by decomposition of a respective phosphorus-containing precursor compound like e.g. sodium hypophosphite ($NaH_2PO_2$). The PGM-containing material is contacted with a compound mentioned above at temperatures from 100 to 800°C, more preferably 200 to 600°C and most preferably 250 - 450°C. When phosphane is used, an additional treatment with a reducing agent is optional. As a reducing agent hydrogen can be used as already mentioned for the first production process. In a preferred manner this reaction is performed under an atmosphere of hydrogen or a mixture of hydrogen and an inert gas, like e.g. argon or nitrogen. The reaction is conducted at elevated temperatures of ≥ 100°C. More preferably, the reduction is done at temperatures of 200 - 600°C and most preferably the temperature of the reduction is set between 250 - 450°C. The conditions applied and materials used explained already for the first process apply mutatis mutandis also for this alternative process.

In an exemplified production process, the PGM-type catalyst is synthesized by first impregnating an oxidic support (e.g. Al2O3) with e.g. Pt using a suitable precursor (e.g. $H_2[PtCl_6]$, $Pt(NH_3)_4(NO_3)_2$, etc.). After impregnation (e.g. 16h stirring at RT), solvent ($H_2O$) removal, and calcination (e.g. 400°C, 2h, air), a subsequent phosphidation-reduction step is performed. The PGM-containing material is contacted with $PH_3$ by e.g. placing it in a tubular furnace with sodium hypophosphite present in a ceramic boat upstream of the PGM-containing material. The furnace is then heated for 2h to 300°C in $N_2$ to decompose the phosphorus-containing precursor to form $PH_3$ which is thought to result in a phosphidation and reduction of the PGM-containing catalyst. A further reduction step in this case is not necessary.

In a further embodiment the present invention is directed to a catalytic system for hydrogenation and dehydrogenation of organic hydrogen carrier molecules, in particular liquid hydrogen carrier compounds comprising:

i) a phosphorus-doped PGM-type catalyst of the invention;
ii) an organic hydrogen carrier molecule; and
iii) optionally a solvent.

Organic hydrogen carrier molecules can store and release hydrogen upon demand in the presence of an adequate catalyst. Such molecules are known to those skilled in the art. The organic hydrogen carrier molecule that are adequate for the intended purpose are those having a sufficient hydrogenation/dehydrogenation efficiency. Preferably, the organic hydrogen carrier molecule in question should have a minimal hydrogen storage and release capacity of at least 3 wt-%, more preferably at least 4 wt-% and most preferably at least 5 wt-% under test conditions. The wt-% refers to hydrogen and the molecule only.

In a preferred aspect, the organic hydrogen carrier molecule is advantageously selected from the group consisting of liquid organic hydrogen carrier comprising a hydrocarbon aromatic compound, liquid organic hydrogen carrier comprising a heteroaromatic compound, and ketones, esters, carboxylic acids, $CO_2$. In terms of liquid organic hydrogen carriers the skilled person knows what LOHC compounds work best for the intended purpose, i.e. to establish a catalytic system allowing a preferably reversible hydrogenation and dehydrogenation of the LOHC under technically reasonable conditions.

LOHCs which can be used in present catalytic system have already been disclosed in the prior art. Preferably, as already mentioned the LOHCs used for the present purpose should be able to undergo reversible hydrogenation and dehydrogenation within the appropriate temperature and pressure range, in particular conditions which can be established in vehicles comprising a fuel cell (working conditions). In a further preferred aspect liquid organic hydrogen carriers are selected from the group consisting of saturated or unsaturated cyclic hydrocarbons, optionally comprising N- and/or O-atoms.

E.g., for a more preferred aspect, the LOHC taken for the inventive catalytic system comprises a hydrocarbon aromatic compound. A liquid organic hydrogen carrier also refers to the partially or completely dehydrogenated form. A partially hydrogenated compound still can have a reasonable $H_2$ capacity. Hence, when talking about hydrocarbon compounds as LOHCs in this context also the possible reaction products of a hydrogenation of the low-energy (dehydrogenated) form of the said compound is encompassed, as it is essentially the same thing in this context. For example, for the case of aromatic hydrocarbons, a partially hydrogenated form of such a compound may chemically not be an "aromatic" compound anymore. However, because it is a product of a partial hydrogenation of an aromatic compound, it is still considered to be an aromatic LOHC. The phrase "hydrocarbon aromatic compound" then refers to a compound that can be obtained by hydrogenation of an aromatic compound. Even more preferred compounds in this regard are those mentioned in the prior art section. Extremely preferred are those selected from the group consisting of toluene, of benzyl toluenes, diaryl methylenes such as dibenzyl toluene.

In a further preferred aspect, the liquid organic hydrogen carrier comprises a heteroaromatic compound. A partially hydrogenated heteroaromatic compound still can have a reasonable $H_2$ capacity. It will be essentially the same thing in this context, but the compound may be chemically not an "aromatic" compound any more. Hence, when talking about heteroaromatic compounds as LOHCs in this context also the possible reaction products of a hydrogenation of said heteroaromatic compound is encompassed. The phrase "heteroaromatic compound" determines the fact that it can be obtained by hydrogenation of a heteroaromatic system composed of hydrocarbons and at least one heteroatom, like N, O, S.

In a still further preferred aspect, compounds for hydrogen storage in organic molecules that allow for reversible dehydrogenation and hydrogenation in instant catalytic system are ketones, esters, carboxylic acids, $CO_2$. In particular preferred are $C_3$ - $C_{10}$ ketones, like acetone, butanone, or acetophenone, $C_1$ - $C_{10}$ esters like formates, acetates, or propionates where the ester substituent is an organyl like an alkyl or aryl such as methyl, ethyl, propyl, benzyl, phenyl or naphthyl, $C_1$ - $C_{10}$ carboxylic acids like formic acid, acetic acid, or benzoic acid. Most preferred are the LOHC systems like dibenzyl toluene (DBT)/H18-DBT, toluene/methylcyclohexane, pyridine/piperidine, N-ethylcarbazole (NEC)/H12-NEC, $CO_2$/methanol, $CO_2$/formic acid, acetone/isopropanol. Most preferred according to the present inventions are LOHC compounds selected from the group consisting of acetone/isopropanol, perhydrobenzyltoluene/benzyltoluene, perhydrodibenzyltoluene/dibenzyltoluene, N-ethylcarbazole (NEC)/H12-NEC.

In this regard, compounds which could theoretically be hydrogenated and dehydrogenated in the catalytic system of the invention but which would provide for too much side reactions during these cycles, or which are not manageable in the catalytic system for other reasons like low fluidity, are not encompassed by the definition of LOHC according to this invention. In particular, the instability (side reaction or decomposition under working conditions) either thermally or chemically e.g. by reaction with $H_2O$, $O_2$, the PGM-type catalyst. According to the invention it is envisaged that in a reversible hydrogenation and dehydrogenation advantageous organic hydrogen carrier molecules can run through 5000 cycles under test conditions but remain the storing/releasing capacity of $H_2$ to at least 50%, more preferably at least 70% and most preferably at least 90% compared to a fresh catalytic system under same conditions.

Preferably, e.g. aldehydes are excluded from the definition of LOHC compounds according to this invention, in particular aldehydes which might easily react with themselves and are thus not feasible for use in a reversible hydrogenation/dehydrogenation reactions as needed for present purpose.

Solvents which can optionally be present in the catalytic system are those which dissolve the LOHC to the necessary extent and which remains in liquid state under the working conditions. E.g. it is conceivable that due to lower reaction temperatures certain OHC molecules become solid or at least waxy and thus improper for use as a hydrogen carrier molecule. In order to still perform the reaction in a liquid state the addition of a solvent may become important, which serves to keep the OHC molecule in a liquid state. All solvents known to the skilled worker which dissolve the respective OHC to a necessary extent and which behave inert under the reaction conditions applied can in principal be used here. Solvents which are of use are those selected from the group consisting of linear, branched or cyclic alkanes, like pentane, hexane, heptane or octane. Aromatic molecules like benzene or toluene are also feasible. In addition, ketones can be used like acetone, MIBK. Also alcohols, ethers, esters, halo alkanes DMSO or DMF can be considered in this respect.

In this sense the components of the catalytic system are mixed together in a respective compartment, heated to a preferred temperature and thereby dehydrogenated. As compartment gas tight tanks, beakers, vessels etc. can be used having a fluid connection to a device for $H_2$-consumption or storage.

Although a certain hydrogen pressure can be present, for the dehydrogenation preferably no excess H2-pressure

needs to be applied. The temperature for this reaction varies advantageously between -40°C - 350°C, more preferably between 100°C - 320°C, and most preferably between 180°C - 280°C. The hydrogenation happens under a certain $H_2$-pressure, preferably at 0.01 - 200 bar, more preferred 0.1 - 100 bar and most preferred 10 - 50 bar. The temperatures for hydrogenation varies between -40°C - 300°C, more preferably 100°C - 300°C and most preferably 150°C - 250°C. The above mentioned conditions of temperature and hydrogen pressure are termed working conditions according to this invention.

As already indicated, the catalytic system is a heterogenous mixture comprising the components of the catalytic system. The system envisaged should be compatible with the conditions necessary for the intended purpose, i.e. to establish a catalytic system allowing reversible hydrogenation and dehydrogenation reactions of the organic hydrogen carrier under technically reasonable conditions, e.g. working conditions, in particular conditions which are present in fuel cell driven vehicles.

In a further embodiment, the present invention is directed to an apparatus for producing electricity comprising a fuel cell and an inventive catalytic system. Such an apparatus for producing electricity preferably further comprise a reactor containing the inventive catalytic system and preferably a system for heating the reactor, and optionally a system for separation of the hydrogen from the organic hydrogen carrier, and optionally one or more heat exchangers. In one aspect, the system for heating the reactor comprises a burner to burn hydrogen. (Niermann, M. et al., Energy Environ. Sci. 2019, 12 (1), 290-307; https://doi.org/10.1039/C8EE02700E). In another aspect, the system for heating the reactor comprises one or more electrically heated bodies, such as plates or meshes, connected to an external electric power source, such as a battery or a generator. In a further aspect, the electrically heated bodies are connected to the fuel cell and the fuel cell provides the electric power to the heating system.

The preferred aspects of the catalytic system according to the invention are applicable to the apparatus mutatis mutandis. In a very preferred mode the catalytic system of the invention functions in a one pot compartment where the hydrogenation and dehydrogenation reaction steps take place in an alternating fashion (e.g. EP3221256B1), by changing the reaction conditions, such as hydrogen partial pressure or temperature.

In still a third embodiment of the present invention, a use for the catalytic system of the invention is claimed. The catalytic system of the invention is used for providing hydrogen to a fuel cell for producing electricity. Preferably, the hydrogen is supplied in a purified form, e.g. as needed for application with a PEM fuel cell. The preferred aspects of the catalytic system and the apparatus apply mutatis mutandis also for the inventive use.

An LOHC catalytic system for the release of hydrogen for a fuel contains advantageously, e.g. (1) a tank containing the hydrogen rich LOHC liquid, (2) a second tank containing the dehydrogenated LOHC liquid, (3) a dehydrogenation reactor, (4) a facility for heating the reactor, such as a hydrogen burner, oil heater, electrical heating, etc., (5) a facility to purify the hydrogen product gas, which typically includes a cooler or heat exchanger to cool the product, and (6) a gas-oil separation unit. The purified hydrogen gas is then fed into the fuel cell to generate electrical power (Niermann, M. et al. Energy Environ. Sci. 2019, 12 (1), 290-307; https://doi.org/10.1039/C8EE02700E; Preuster, P. et al., J. Hydrog. Ener. 2018, 43(3), 1758-1768).

The present invention relates to the hydrogen storage and release in organic liquids. The complete cycle using e.g. LOHC consists of (1) the hydrogenation of the dehydrogenated form of the LOHC system, using hydrogen gas and (2) a dehydrogenation of the hydrogenated form of the LOHC in the catalytic system. The hydrogen is thus stored as the hydrogenated form of the LOHC. The hydrogenated form of the LOHC has a higher energy density per volume than compressed or liquefied hydrogen, is easier to transport or store, and is safer to handle, due to the lower flammability of the organic liquids. The catalytic system of the invention enables the skilled person to perform the envisaged liberation and storing of hydrogen at much lower temperatures, thus serving for a technical applicable solution for mobile vehicles equipped with a fuel cell for producing electricity. This was not made evident from the prior art.

Figures:

Figure 1. X-Ray diffraction patterns of the $Al_2O_3$ support, 3.1 wt.% $Pt/Al_2O_3$ (reduced at 600°C) and phosphorus-doped Pt-P-catalysts (all reduced at 600°C). XRD was measured between 10 - 90°, 0.0170 step size and 100 sec time per step. The diffraction patterns of the P-doped Pt catalysts show the features of $\gamma$-$Al_2O_3$, which overlap with Pt, whereas the characteristic features for $PtP_2$ cannot be observed. Reference data for $Al_2O_3$ (Gutierrez, G.; Taga, A.; Johansson, B. Theoretical structure determination of gamma-(Al2O3); Physical Review, Serie 3. B - Condensed Matter (18,1978-), 2002, 65, 012101/1-012101/4), Pt (Bredig, G; Allolio, R; Roentgenuntersuchungen an katalytisch wirkenden Metallen, Zeitschrift fuer Physikalische Chemie (Frankfurt Am Main), 1927, 126, 41-71) and $PtP_2$ (Wyckoff, R. W. G., The second edition of Structure of Crystals, The Chemical Catalog Company Inc., New York 1931, pp 234 and 238) are included.

Figures 2 a - c; Top: corrugated glass fiber showing alternating flat and wavy layers. Bottom left: Catalytic article obtained by winding a flat and corrugated sheet together. In this example, the corrugated structure consists of metal. Bottom right: Catalytic article obtained by stacking flat and corrugated sheets of glass fiber paper.

Figure 3: Batch set-up for the dehydrogenation of perhydro-benzyl toluene. It consists of a three-necked round-bottom 100 mL flask (1), equipped with a magnetic stirrer, a heating mantle (2), a magnetic stirring plate (3), a double-neck attachment (4) for Ar-supply and for the storage of the catalyst (5) during the heating/inertization phase. One neck of the flask is used for the thermocouple and sample-taking through a septum (6). Released hydrogen is led through a reflux condenser (7) and a bubbler (8) before it is led to the exhaust.

Examples

Materials

$Al_2O_3$ support materials were either provided by *Umicore NV/SA* (150 $m^2$/g BET surface area, 13.7 nm pore size, 0.490 g/$cm^3$ total pore volume) or *Sasol* (Puralox, 136 $m^2$/g BET surface area, 13.7 nm pore size, 0.466 g/$cm^3$ total pore volume).

Chloroplatinic acid hexahydrate ($H_2[PtCl_6]\cdot 6H_2O$, 38 - 40% Pt) was purchased from *abcr GmbH.*

Sodium hypophosphite monohydrate ($NaH_2PO_2\cdot H_2O$), phosphonic acid ($H_3PO_3$) and GC-grade acetone (Suprasolv) were purchased from *Merck KGaA.*

Example 1

This example shows that an active catalyst for LOHC-dehydrogenation is obtained by the method of the invention.

A catalyst A was prepared by synthesizing $Pt/Al_2O_3$ in a first step by mixing $Al_2O_3$-support with a respective amount of aqueous $H_2[PtCl_6]$ (pH=4) to result in a 3 wt.% $Pt/Al_2O_3$ catalyst. The suspension is stirred overnight (300 rpm, 16 h) at room temperature. Afterwards, the solvent is removed at a rotary evaporator (80°C, 100 mbar) and the dried catalyst is then calcined in a muffle oven at 400°C for 2 h under air flow (heating rate 10°C/min). A part of this catalyst is then reduced for 2h at 440°C in 10% $H_2/N_2$ to obtain 3.0 wt.% $Pt/Al_2O_3$ (Catalyst A-red).

Another part of catalyst A is impregnated with phosphonic acid ($H_3PO_3$) in a second impregnation step, to form catalyst B. Here, $Pt/Al_2O_3$ is suspended with deionized water before the P-precursor $H_3PO_3$ is added in a respective amount to result in a loading of 0.9 wt.%. The mixture is stirred overnight (300 rpm, 16 h) at room temperature. Afterwards, the solvent is removed at a rotary evaporator (80°C, 100 mbar) and the dried catalyst is then reduced at 600°C for 2 h in 10% $H_2/N_2$. The catalyst contains 2.9 wt.% Pt and 0.8 wt.% P, corresponding to a molar Pt:P ratio of 0.58.

To test the performance of the catalyst powders in perhydro-benzyl toluene (H12-BT) dehydrogenation, a glass batch set-up was used (Figure 3). In the experiment, 15.00 g H12-BT and 250 mg of catalyst are placed in the setup to result in a molar H12-BT:Pt-ratio of 2000:1. The reaction temperature of 250°C is adjusted. Liquid samples (ca. 0.5 mL) are taken after a reaction time of 360 min and the degree of dehydrogenation (DoDh) of the liquid phase is measured via the refractive index. From the DoDh, hydrogen productivity can be calculated.

Table 1:

| | $H_2$ production in 360 min | Initial productivity (@ 5 min) |
|---|---|---|
| Catalyst A-red | 69 $gH_2/gPt$ | 0.73 $gH_2$/(gPt min) |
| Catalyst B | 85 $gH_2/gPt$ | 0.85 $gH_2$/(gPt min) |

For catalyst A-red, the total production of hydrogen after 6 hours was 69 $g_{H2}/g_{Pt}$, and for catalyst B the total production of hydrogen after 6 hours was 85 $g_{H2}/g_{Pt}$, corresponding to an increase in total hydrogen production in the P-doped catalyst (catalyst B) by 23 %.

Example 2

This example shows the decreased formation of methyl fluorene, which is an indicator for the degradation of the LOHC, with a Pt-P-catalyst prepared by the phosphidation method of the invention compared to a non-phosphided $Pt/Al_2O_3$.

A catalyst A-red was prepared as described in example 1.

A catalyst C was prepared by placing 1 g of non-reduced $Pt/Al_2O_3$ (catalyst A from example 1) in a ceramic boat in a tubular furnace. Upstream of it, 250 mg $NaH_2PO_2 \cdot H_2O$ is placed in another ceramic boat. The furnace is then heated at a rate of 10°C/min in pure $N_2$ to 300°C, holding this temperature for 2 h. Here, $NaH_2PO_2$ decomposes to $Na_2HPO_4$ and $PH_3$, whereby the latter should reduce the $Pt/Al_2O_3$ catalyst and modify it with phosphorus at the same time. The catalyst contains 2.5 wt.% Pt and 0.4 wt.% P, corresponding to a Pt:P ratio of 1.0

The performance of the catalyst powders in perhydro-benzyl toluene (H12-BT) dehydrogenation was tested as described in example 1. The liquid phase is analyzed using gas chromatography (GC-FID) by which the methyl fluorene content is determined.

Table 2:

| | DoDh after 360 min | Methyl fluorene content |
|---|---|---|
| Catalyst A-red | 57 % | 0.43 % |
| Catalyst C | 56 % | 0.36 % |

For catalyst A-red, the total methyl fluorene content in the liquid phase after 6 hours was 0.43 %, and for catalyst C the total methyl fluorene content in the liquid phase after 6 hours was 0.36 %, corresponding to a reduced methyl fluorene formation with the P-doped catalyst (catalyst C) by 16 %.

Example 3

This example shows the effect of reduction temperature on the performance in H12-BT dehydrogenation of a $Pt\text{-}P/Al_2O_3$ catalyst prepared by a method of the invention.

A part of catalyst A (prepared as described in example 1) is reduced for 2h at 440°C in 10% $H_2/N_2$ to obtain 3.0 wt.% $Pt/Al_2O_3$ (catalyst A-440) and another part is reduced for 2h at 600°C in 10% H2/N2 to obtain 3.1 wt.% Pt/Al2O (catalyst A-600).

A catalyst was prepared as described in Example 1 (catalyst B) and contains 2.7 wt.% Pt and 0.6 wt.% P (catalyst B-600). Another catalyst was prepared as described in example 1 (catalyst B), but reduced at 440°C, instead of 600°C, to obtain a catalyst with 3.0 wt.% Pt and 0.6 wt.% P (catalyst B-440), corresponding to a molar Pt:P ratio of 0.8.

The performance of the catalyst powders in perhydro benzyl toluene (H12-BT) dehydrogenation was tested as described in Example 1.

Table 3:

| | **$H_2$ production in 360 min** | **Initial productivity (after 5 min)** |
|---|---|---|
| Catalyst A-440 | 56 $g_{H2}/g_{Pt}$ | 0.22 $g_{H2}/(g_{Pt}$ min) |
| Catalyst A-600 | 33 $g_{H2}/g_{Pt}$ | 0.17 $g_{H2}/(g_{Pt}$ min) |
| Catalyst B-440 | 19 $g_{H2}/g_{Pt}$ | 0.03 $g_{H2}/(g_{Pt}$ min) |
| Catalyst B-600 | 81 $g_{H2}/g_{Pt}$ | 0.51 $g_{H2}/(g_{Pt}$ min) |

For catalyst A-440 and A-600, the total production of hydrogen after 6 hours was 56 and 33 $g_{H2}/g_{Pt}$, respectively. For catalyst B-440 and B-600 the total production of hydrogen after 6 hours was 19 and 81 $g_{H2}/g_{Pt}$, respectively. This corresponds to an increase in total hydrogen production in the P-doped catalyst reduced at 600°C (B-600) by 45 % (with respect to A-440) and 145 % (with respect to A-600). On the other hand, a P-doped catalyst reduced at 440°C (B-440) shows a hydrogen productivity that is 66 % lower compared to catalyst A-440.

Example 4

This example shows the effect of Pt:P-ratio on the performance of $Pt\text{-}P/Al_2O_3$ catalyst in H12-BT dehydrogenation.

The catalysts with different P-loadings are prepared as described in example 1 (catalyst B), by adjusting the precursor ratios to reach final Pt:P-ratios of 1.75 (catalyst B-1.75), 0.99 (catalyst B-0.99), 0.58 (catalyst B-0.58) and 0.40 (catalyst B-0.40), respectively.

The performance of the catalyst powders in perhydro benzyl toluene (H12-BT) dehydrogenation was tested as described in example 1.

Table 4:

| | $H_2$ production in 360 min | Initial productivity (@ 5 min) |
|---|---|---|
| Catalyst B-1.75 | 24 $g_{H2}/g_{Pt}$ | 0.15 $gH_2$/(gPt min) |
| Catalyst B-0.99 | 67 $g_{H2}/g_{Pt}$ | 0.49 gH2/(gPt min) |
| Catalyst B-0.58 | 85 $g_{H2}/g_{Pt}$ | 0.85 gH2/(gPt min) |
| Catalyst B-0.40 | 56 $g_{H2}/g_{Pt}$ | 0.42 gH2/(gPt min) |

Catalyst B-0.58 reaches the highest hydrogen production within a reaction time of 360 minutes compared to the other phosphorus modified catalysts with lower and higher P-content.

Example 5

This example shows the increased activity of a phosphorus modified Pt-catalyst prepared by a method of the invention compared to a non-phosphided Pt-catalyst in the hydrogenation of benzyl toluene (H0-BT) to perhydro-benzyl toluene (H12-BT) reaction.

A catalyst A-H was prepared as described in example 1 (Catalyst A-red, 3 wt.% Pt) and a catalyst B-H was prepared as described in example 1 (Catalyst B, 3 wt.% Pt, 0.6 wt.% P).

To test the performance of the catalyst powders in the hydrogenation of benzyl toluene (H0-BT) to perhydro-benzyl toluene, an autoclave was filled with 0.8 mol of H0-BT and a catalyst amount corresponding to a Pt-concentration of 0.04 mol%. The temperature was increased to 210°C and a pressure of 30 bar hydrogen was applied. To follow the progress of the reaction, the degree of hydrogenation (DoH) of the liquid phase is measured via gas chromatography, by taking liquid samples from the autoclave reactor during the reaction. As a measure for activity, the times needed to reach a DoH of 99 % are compared.

Table 5:

| | Time needed to reach DoH = 99% |
|---|---|
| Catalyst A-H | 30 min |
| Catalyst B-H | 7.5 min |

For catalyst A-H, the time needed to reach a DoH of 99 % is 30 min, and for catalyst B-H it is 7.5 min. This corresponds to a 4-fold acceleration of the hydrogenation reaction using the P-doped catalyst (catalyst B-H).

## Claims

1. Phosphorus-doped PGM-type catalyst for the hydrogenation and dehydrogenation of organic hydrogen carrier molecules, in particular liquid hydrogen carrier compounds, in which the catalyst is supported on a solid support material, the phosphorus has an average formal oxidation state of ≤ 2 and is present in a molar PGM:P-ratio x of $0.1 \leq x \leq 10$, while not comprising a crystalline phosphide phase, and wherein the PGM is selected from the group consisting of Pt, Pd, Ru, Ir, Rh, and mixtures thereof.

2. Phosphorus-doped PGM-type catalyst according to claim 1,
**characterized in that**
the solid support material is selected from the group consisting of alumina, zirconia, titania, ceria, SiC, AlTi, cordierite or mixtures or composites thereof.

3. Phosphorus-doped PGM-type catalyst according to claim 1 or 2,
**characterized in that**
the PGM is Pt and/or Pd.

**4.** Phosphorus-doped PGM-type catalyst according to one of the preceding claims, **characterized in that** the amount of PGM per solid support material is in the range of from 0,01 - 8 wt.-%.

**5.** Phosphorus-doped PGM-type catalyst according to one of the preceding claims, **characterized in that** the PGM-type catalysts comprise the PGM on the support in a scale y of from 1,0 nm $\leq$ y $\leq$ 50 nm.

**6.** Phosphorus-doped PGM-type catalyst according to one of the preceding claims, **characterized in that** the molar PGM:P-ratio x is 0,3 $\leq$ x $\leq$ 5.

**7.** Phosphorus-doped PGM-type catalyst according to one of the preceding claims, **characterized in that** the catalyst comprises further dopants selected from the group consisting of S, Se, Si.

**8.** Process for the production of a phosphorus-doped PGM-type catalyst of one of claims 1 - 7, comprising the steps of:

i) supporting at least one PGM on a solid support material;
ii) contacting it with a salt or acid of an oxide of phosphorus; and
iii) subsequently treating it with a reducing agent at temperatures of $\geq$ 300°C.

**9.** Process according to claim 8, **characterized in that** the acids or salts derived from the acid of an oxide of phosphorus are selected from the group consisting of phosphoric acid, phosphonic acid, hypophosphoric acid, diphosphoric acid.

**10.** Process according to claim 8 or 9, **characterized in that** the reducing agent is molecular hydrogen or a compound that produces hydrogen upon reaction with protons.

**11.** Process according to one of claims 8 - 10, **characterized in that** the temperature of the reduction is set to $\geq$ 550°C.

**12.** Process for the production of a phosphorus-doped PGM-type catalyst of one of claims 1 - 7, comprising the steps of:

i) supporting at least one PGM on a solid support material;
ii) contacting it with a compound selected from the group consisting of $PH_3$, alkyl or aryl phosphines and
iii) optionally contacting it with a reducing agent.

**13.** Catalytic system for hydrogenation and dehydrogenation of organic hydrogen carrier molecules, in particular liquid hydrogen carrier compounds comprising:

i) a phosphorus-doped PGM-type catalyst of one of claims 1 - 7;
ii) an organic hydrogen carrier molecule; and
iii) optionally a solvent.

**14.** Catalytic system according to claim 13, **characterized in that** the organic hydrogen carrier is selected from the group consisting of saturated or unsaturated cyclic hydrocarbons, optionally comprising N- and/or O-atoms.

**15.** Catalytic system according to one of claims 13 or 14, **characterized in that** the organic hydrogen carrier molecule is a liquid organic hydrogen carrier comprising a hydrocarbon aromatic compound.

**16.** Catalytic system according to one of claims 13 or 14,
**characterized in that**
the organic hydrogen carrier molecule is a liquid organic hydrogen carrier comprising a heteroaromatic compound.

**17.** Catalytic system according to one of claims 13 or 14,
**characterized in that**
the organic hydrogen carrier comprises compounds selected from the group consisting of ketones, esters, carboxylic acids, $CO_2$.

**18.** Apparatus for producing electricity comprising a fuel cell and a catalytic system according to one of claims 13 - 17.

**19.** Use of a catalytic system of one of claims 13 - 17 for providing hydrogen to a fuel cell for producing electricity.

Fig. 1

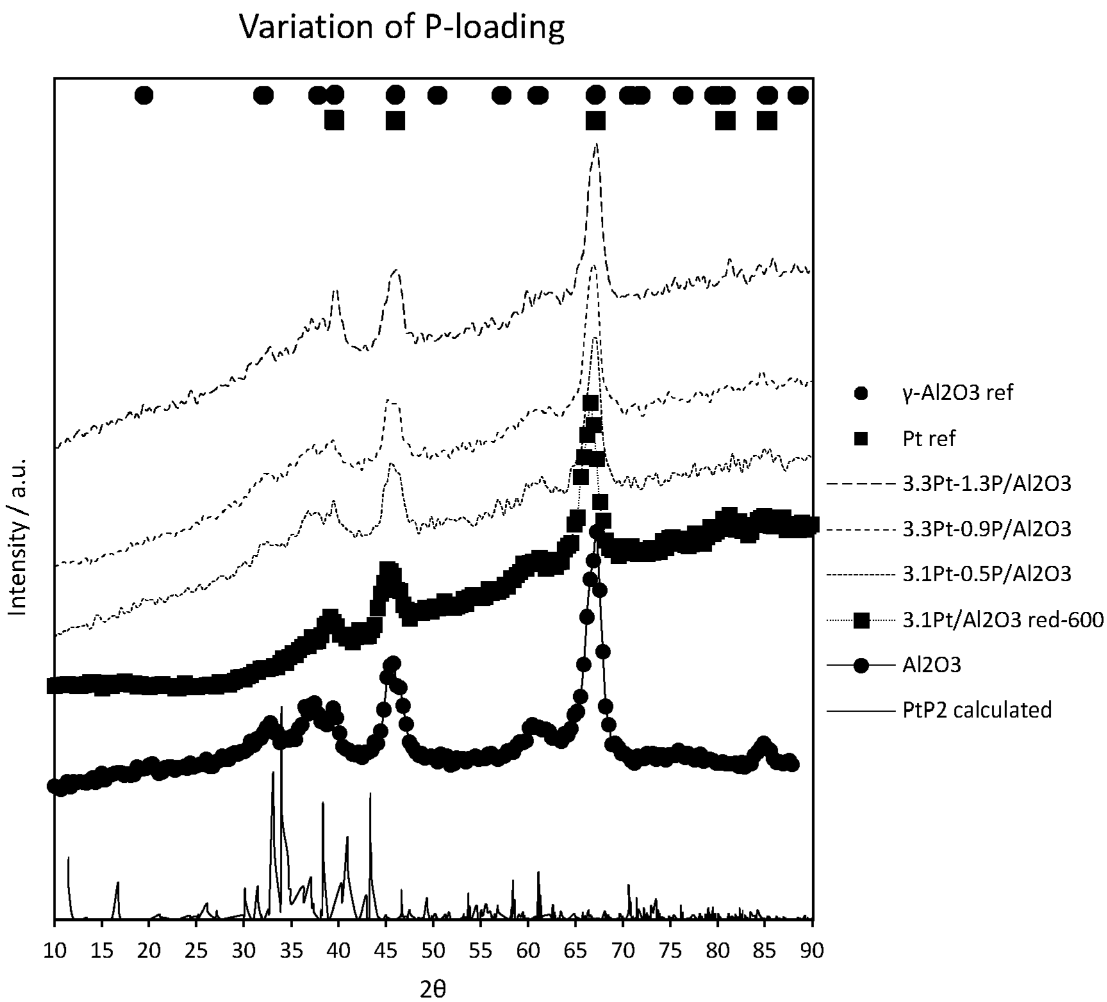

Variation of P-loading
Intensity / a.u.
2θ
10
15
20
25
30
35
40
45
50
55
60
65
70
75
80
85
90
γ-Al2O3 ref
Pt ref
3.3Pt-1.3P/Al2O3
3.3Pt-0.9P/Al2O3
3.1Pt-0.5P/Al2O3
3.1Pt/Al2O3 red-600
Al2O3
PtP2 calculated

Fig 2. a – c:

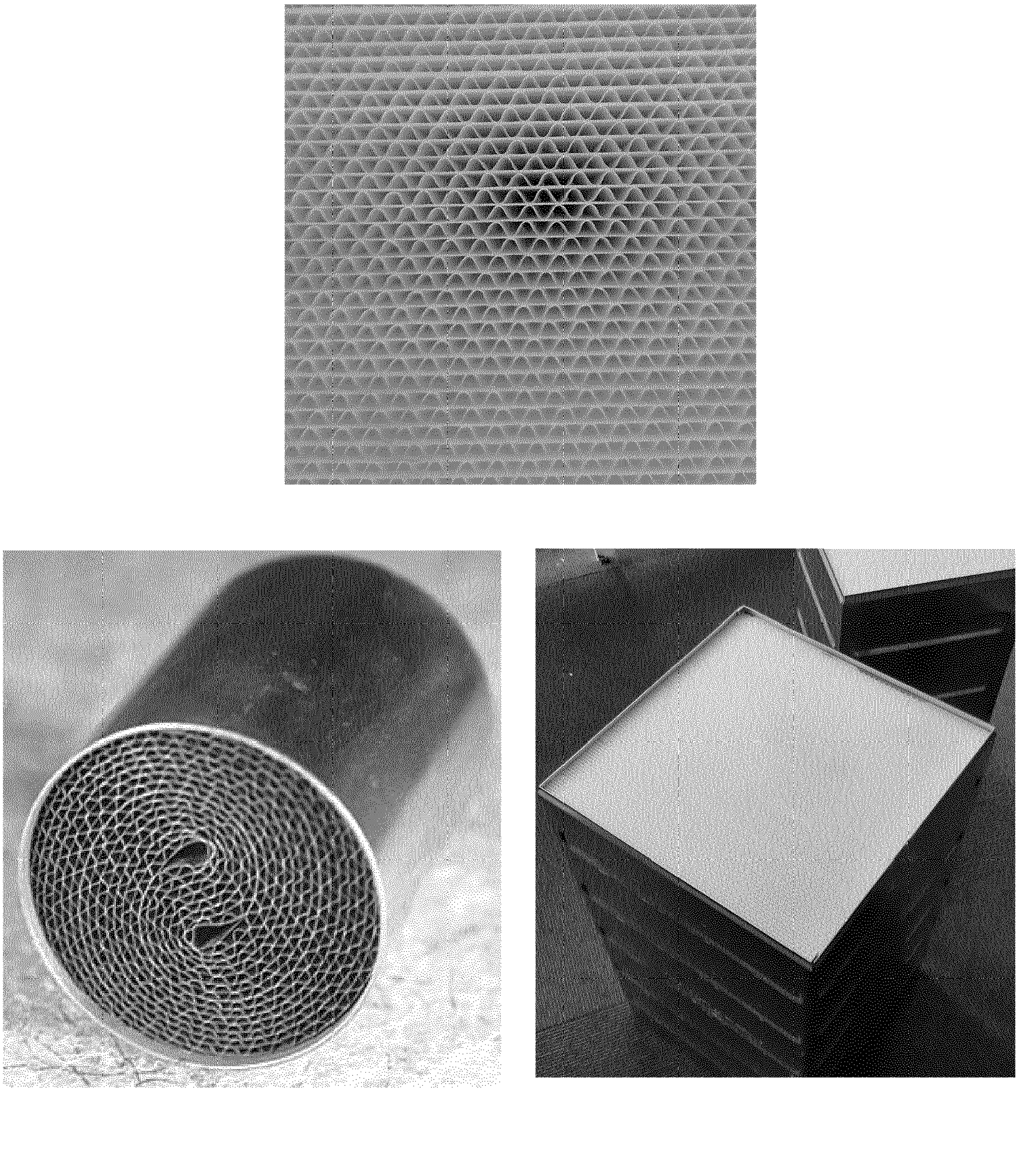

Fig. 3

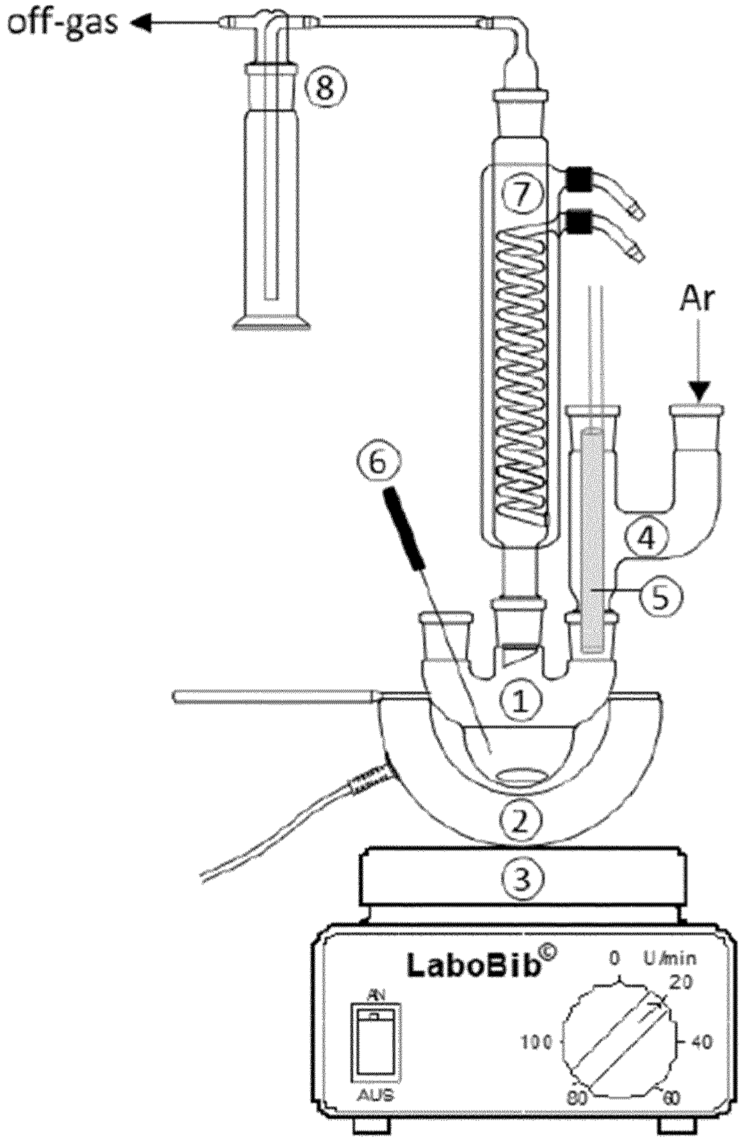

Europäisches Patentamt
European Patent Office
Office européen des brevets

# EUROPEAN SEARCH REPORT

Application Number
EP 22 20 3818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2016/035081 A1 (YEDA RES & DEV [IL]) 10 March 2016 (2016-03-10)<br>* figure 1 *<br>* claim 37 *<br>* examples 1,8 *<br>* page 45, line 24 - page 46, line 33 * | 1-7, 12-19<br>8-11 | INV.<br>H01M8/0606<br>B01J7/00<br>B01J23/40<br>B01J27/185<br>H01M8/0612<br>C01B3/00<br>C01B3/40 |
| X<br>A | WO 2019/191034 A1 (RES TRIANGLE INST [US]) 3 October 2019 (2019-10-03)<br>* claims 20-23 * | 1-7,13<br>8-12, 14-19 | |
| X<br>A | CN 110 813 336 A (UNIV ZHEJIANG TECHNOLOGY) 21 February 2020 (2020-02-21)<br>* paragraph [implementation9] *<br>* paragraphs [0003], [0042] - [0044] * | 1,4-7<br>2,3,8-19 | |

TECHNICAL FIELDS SEARCHED (IPC)

H01M
B01J
C01B
C01C

The present search report has been drawn up for all claims

1

| Place of search | Date of completion of the search | Examiner |
|---|---|---|
| Munich | 29 April 2023 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 20 3818

This annex lists the patent family members relating to the patent documents cited in the above-mentioned European search report. The members are as contained in the European Patent Office EDP file on
The European Patent Office is in no way liable for these particulars which are merely given for the purpose of information.

29-04-2023

| Patent document cited in search report | Publication date | Patent family member(s) | Publication date |
|---|---|---|---|
| WO 2016035081 A1 | 10-03-2016 | AU 2015310503 A1 | 06-04-2017 |
| | | CA 2959873 A1 | 10-03-2016 |
| | | CN 107001032 A | 01-08-2017 |
| | | EP 3189006 A1 | 12-07-2017 |
| | | JP 2017528409 A | 28-09-2017 |
| | | KR 20170052618 A | 12-05-2017 |
| | | US 2017283257 A1 | 05-10-2017 |
| | | WO 2016035081 A1 | 10-03-2016 |
| WO 2019191034 A1 | 03-10-2019 | AU 2019242630 A1 | 15-10-2020 |
| | | CA 3095128 A1 | 03-10-2019 |
| | | CN 112218716 A | 12-01-2021 |
| | | EP 3774038 A1 | 17-02-2021 |
| | | JP 2021519204 A | 10-08-2021 |
| | | KR 20200127038 A | 09-11-2020 |
| | | US 2021008529 A1 | 14-01-2021 |
| | | WO 2019191034 A1 | 03-10-2019 |
| CN 110813336 A | 21-02-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020120261 A1
- WO 2020064222 A1
- WO 2018228895 A1
- DE 102017201451 A1
- US 2016061383 AA
- DE 102012004444 A1
- US 20100081034A A
- US 2011265738 A
- US 2011268651 A
- US 2015056526 A
- CN 108940150 A
- KR 20210120577 A
- DE 102014006430 A1
- CN 112768724 A
- WO 2010066345 A1
- EP 3221256 B1


### Non-patent literature cited in the description


- *Energy Environ. Sci.,* 2011, vol. 4, 2767
- **HUANG et al.** *J. Am. Chem. Soc,* 2009, vol. 131 (39), 13898-13899
- **FANG et al.** *J Am. Chem. Soc,* 2009, vol. 131 (42), 15330-15338, https://en.wikipedia.org/w/index.php?title=Liquid organic hydrogen carriers&oldid=1071399187
- **HEUBLEIN, N et al.** *International Journal of Hydrogen Energy,* 2020, vol. 45 (46), 24902-24916, https://doi.org/10.1016/j.ijhydene.2020.04.274
- **KWAK et al.** *Energy Conversion and Management,* 2021, vol. 239, 114124, https://doi.org/10.1016/j.enconman.2021.114124
- **XIE, Y. ; MILSTEIN, D.** *ACS Appl. Energy Mater.,* 2019, vol. 2 (6), 4302-4308, https://doi.org/10.1021/acsaem.9b00523
- **JORSCHICK, H et al.** *Sustainable Energy Fuels,* 2021, vol. 5 (5), 1311-1346, https://doi.org/10.1039/D0SE01369B
- **SAMPATH, A. ; FLAHERTY, D. W.** Effects of phosphorus addition on selectivity and stability of Pd model catalysts during cyclohexene dehydrogenation. *Catalysis Science & Technology,* 2020, vol. 10 (4), 993-1005
- **OUMA, C. N. ; OBODO, K. O. ; MODISHA, P. M. ; BESSARABOV, D.** Si, P, S and Se surface additives as catalytic activity boosters for dehydrogenation of methylcyclohexane to toluene - A liquid organic hydrogen carrier system: Density functional theory insights. *Materials Chemistry and Physics,* 2022, vol. 279, 125728
- **J. T. MILLER et al.** Structural and Catalytic Properties of Isolated Pt2+ Sites in Platinum Phosphide (PtP2);. *ACS Catalysis,* 2021, vol. 11 (21), 13496-13509
- **FURUKAWA, S ; MATSUNAMI, Y. ; HAMADA, I. ; HASHIMOTO, Y ; SATO, Y. ; KOMATSU, T.** Remarkable Enhancement in Hydrogenation Ability by Phosphidation of Ruthenium: Specific Surface Structure Having Unique Ru Ensembles. *ACS Catal.,* 2018, vol. 8 (9), 8177-8181, https://doi.org/10.1021/acscatal.8b02582
- **MA, R ; YANG, T. ; GAO, J. ; KOU, J. ; CHEN, J. Z. ; HE, Y ; MILLER, J. T ; LI, D.** Composition Tuning of Ru-Based Phosphide for Enhanced Propane Selective Dehydrogenation. *ACS Catal.,* 2020, 10
- **SHAO, F.** Geometric and Electronic Effects on the Performance of a Bifunctional Ru2P Catalyst in the Hydrogenation and Acceptorless Dehydrogenation of N-Heteroarenes. *Chinese Journal of Catalysis,* 2021, 10
- **KIM, S. S ; BRITCHER, L. ; KUMAR, S ; GRIESSER, H. J.** XPS Study of Sulfur and Phosphorus Compounds with Different Oxidation States. *JSM,* 2018, vol. 47 (8), 1913-1922
- Heterogeneous Catalysis and Solid Catalysts. Ullmann Encyclopedia. Wiley-VCH Verlag GmbH & Co, 2009, 47
- Heterogeneous Catalysis and Solid Catalysts. Ullmann Encyclopedia. Wiley-VCH Verlag GmbH & Co. KGaA, 2009, 36
- Synthesis of Solid Catalysts. Wiley-VCH, 2009
- Heterogeneous Catalysis and Solid Catalysts. Ullmann Encyclopedia. Wiley-VCH Verlag GmbH & Co. KGaA, 2009, 47
- **H. B. FRIEDRICH et al.** Monoliths: A Review of the Basics, Preparation Methods and Their Relevance to Oxidation. *Catalysts,* 2017, vol. 7, 62
- **AVILA et al.** *Chem. Eng. J.,* 2005, vol. 109, 11-36

- **H. B. FRIEDRICH et al.** Monoliths: A Review of the Basics. *Preparation Methods and Their Relevance to Oxidation, Catalysts,* 2017, vol. 7, 62
- **TANABE, T ; NAGAI, Y ; HIRABAYASHI, T ; TAKAGI, N. ; DOHMAE, K ; TAKAHASHI, N ; MATSUMOTO, S ; SHINJOH, H. ; KONDO, J. N. ; SCHOUTEN, J. C.** Low Temperature CO Pulse Adsorption for the Determination of Pt Particle Size in a Pt/Cerium-Based Oxide Catalyst. *Applied Catalysis A: General,* 2009, vol. 370 (1-2), 108-113, https://doi.org/10.1016/j.apcata.2009.09.030
- **CHATTOPADHYAY, S.** Review on Monolithic Ceramic Catalysts in Different Applications Support Materials, Incorporation Techniques and Physical Properties. *Topical Reviews,* 2005, vol. 65 (4), 179
- **PREUSTER, P ; PAPP, C. ; WASSERSCHEID, P.** Liquid organic hydrogen carriers (LOHCs): toward a hydrogen-free hydrogen economy. *Accounts of chemical research,* 2017, vol. 50 (1), 74-85
- **KOU, J et al.** Structural and Catalytic Properties of Isolated Pt2+-Sites in Platinum Phosphide (PtP). *ACS Catalysis,* 2021, vol. 11 (21), 13496-13509
- **ALVARADO RUPFLIN, L. et al.** Platinum group metal phosphides as heterogeneous catalysts for the gas-phase hydroformylation of small olefins. *ACS Catalysis,* 2017, vol. 7 (5), 3584-3590
- **ALVARADO RUPFLIN, L. et al.** Platinum group metal phosphides as efficient catalysts in hydroprocessing and syngas-related catalysis. *Catalysts,* 2018, vol. 8 (3), 122
- **BEGHI, G. E.** Review of thermochemical hydrogen production. *International Journal of Hydrogen Energy,* 1981, vol. 6 (6), 555-566, https://en.wikipedia.org/wiki/Hydrogen#Discovery_and_use
- **SHENG, Q. ; LI, X. ; PRINS, R. ; LIU, C. ; HAO, Q. ; CHEN, S.** Understanding the Reduction of Transition-Metal Phosphates to Transition-Metal Phosphides by Combining Temperature-Programmed Reduction and Infrared Spectroscopy. *Angewandte Chemie International,* 2021, vol. 60 (20), 11180-11183, https://doi.org/10.1002/anie.202100767
- **LIU, D. ; LI, X. ; WEI, L ; ZHANG, T ; WANG, A. ; LIU, C. ; PRINS, R.** Disproportionation of Hypophosphite and Phosphite. *Dalton Trans.,* 2017, vol. 46 (19), 6366-6378
- **NIERMANN, M. et al.** *Energy Environ. Sci.,* 2019, vol. 12 (1), 290-307, https://doi.org/10.1039/C8EE02700E
- **PREUSTER, P. et al.** *J. Hydrog. Ener.,* 2018, vol. 43 (3), 1758-1768
- **GUTIERREZ, G ; TAGA, A. ; JOHANSSON, B.** Theoretical structure determination of gamma-(Al2O3). *Physical Review, Serie 3. B - Condensed Matter,* 2002, vol. 18, 65
- **BREDIG, G ; ALLOLIO, R.** Roentgenuntersuchungen an katalytisch wirkenden Metallen. *Zeitschrift fuer Physikalische Chemie,* 1927, vol. 126, 41-71
- **WYCKOFF, R. W. G.** The second edition of Structure of Crystals. The Chemical Catalog Company Inc, 1931, 234-238